# EUROPEAN PATENT APPLICATION

(11) **EP 4 586 488 A1**
(43) Date of publication of application: **16.07.2025**
(21) Application number: 23862999.2
(22) Date of filing: 28.08.2023
(51) Int. Cl.: H02M 7/48, H01M 10/48, H01M 10/613, H01M 10/625, H01M 10/633, H01M 10/637, H01M 10/667, H02J 7/00, H02P 27/06

(54) **ELECTRIC POWER CONVERSION DEVICE AND PROGRAM**

(30) Priority: 09.09.2022 JP 2022144020
(71) Applicant: DENSO CORPORATION, Kariya-city, Aichi 448-8661 (JP)
(72) Inventor: KAZAOKA, Ryoya, Kariya-city, Aichi 448-8661 (JP); SASAMA, Yuta, Kariya-city, Aichi 448-8661 (JP); TAKASHIMA, Kaoru, Kariya-city, Aichi 448-8661 (JP)
(74) Representative: TBK
(86) International application number: PCT/JP2023/031004
(87) International publication number: WO 2024/053460

(57) **Abstract**

A power conversion apparatus includes: an upper arm switch (SWH) and a lower arm switch (SWL) that are connected in series; a first capacitor (21) that is electrically connected in parallel to the upper arm switch and the lower arm switch; a coil (11) of which a first end side is electrically connected to a connection point between the upper arm switch and the lower arm switch; a second capacitor (90); a high-potential-side electrical path (22H) that is electrically connected to the upper arm switch; and a low-potential-side electrical path (22L) that is electrically connected to the lower arm switch. One of the high-potential-side electrical path and the low-potential-side electrical path and a second end side of the coil are electrically connected via the second capacitor. The other of the high-potential-side electrical path and the low-potential-side electrical path and the second end side of the coil are electrically connected via a power storage unit (33). The power conversion apparatus includes a control unit (100) that performs switching of the upper arm switch and the lower arm switch.

## Description

### [Cross-Reference to Related Application]

The present application is based on and claims the benefit of priority from Japanese Patent Application No. 2022-144020, filed on September 9, 2022, the description of which is incorporated herein by reference.

### [Technical Field]

The present disclosure relates to a power conversion apparatus and a program.

### [Background Art]

Conventionally, as a method for raising temperatures of a plurality of storage batteries, a method in which the storage batteries and windings of a rotating electric machine are electrically connected, and switching of upper arms switches and lower arm switches is performed so that a current flows between the storage batteries through an inverter and the windings is known.

### [Citation List]

### [Patent Literature]

[PTL 1] JP 2020-120566 A

### [Summary]

Incidentally, a high-frequency current may be generated in accompaniment with the above-described switching. As a measure to suppress the high-frequency current from flowing into the storage batteries, providing a capacitor on an output side of the windings can be considered. A temperature raising method for cases in which such a capacitor is provided is desired.

The present disclosure has been achieved in light of the above-described issues. An object of the present disclosure is to provide a power conversion apparatus and a program capable of raising a temperature of a power storage unit.

The present disclosure includes: an upper arm switch and a lower arm switch that are connected in series; a first capacitor that is electrically connected in parallel to the upper arm switch and the lower arm switch; a coil of which a first end side is electrically connected to a connection point between the upper arm switch and the lower arm switch; a second capacitor; a high-potential-side electrical path that is electrically connected to the upper arm switch and a low-potential-side electrical path that is electrically connected to the lower arm switch, one of the high-potential-side electrical path and the low-potential-side electrical path and a second end side of the coil being electrically connected via the second capacitor, and the other of the high-potential-side electrical path and the low-potential-side electrical path and the second end side of the coil being electrically connected via a power storage unit; and a control unit that performs switching of the upper arm switch and the lower arm switch.

As a result of the above-described configuration, a ripple current can be sent between the power storage unit and the second capacitor through the coil, by switching of the upper arm switch and the lower arm switch being performed. Power can be consumed by internal resistance of a storage battery and a temperature of the storage battery can be raised by self-heat generation.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is an overall configuration diagram of a system according to a first embodiment;
Fig. 2 is a flowchart for explaining an example of operations of a control apparatus according to the first embodiment;
Fig. 3 is a flowchart for explaining an example of operations of the control apparatus according to the first embodiment;
Fig. 4 is a diagram for explaining an aspect of a circuit configuration according to the first embodiment;
Fig. 5 is a diagram for explaining an aspect of an equivalent circuit according to the first embodiment;
Fig. 6 is a diagram for explaining an aspect of an equivalent circuit according to the first embodiment;
Fig. 7 is a diagram for explaining an aspect of an equivalent circuit according to the first embodiment;
Fig. 8 is a diagram for explaining an aspect of an equivalent circuit according to the first embodiment;
Fig. 9 is a diagram of simulation results according to the first embodiment;
Fig. 10 is a diagram for explaining an aspect of an equivalent circuit according to the first embodiment;
Fig. 11 is a diagram for explaining an aspect of a circuit configuration according to the first embodiment;
Fig. 12 is a diagram for explaining an aspect of a circuit configuration according to a second embodiment;
Fig. 13 is a diagram for explaining an aspect of an equivalent circuit according to the second embodiment;
Fig. 14 is a diagram for explaining an aspect of a circuit configuration according to a third embodiment;
Fig. 15 is a diagram for explaining an aspect of a circuit configuration according to a fourth embodiment;
Fig. 16 is a diagram for explaining an aspect of a circuit configuration according to a fifth embodiment; and
Fig. 17 is a diagram for explaining an aspect of a circuit configuration according to a sixth embodiment.

### [Description of Embodiments]

A plurality of embodiments will be described with reference to the drawings. According to the plurality of embodiments, functionally and/or structurally corresponding sections and/or associated sections may be given the same reference numbers or references numbers having differing digits in the hundreds place and higher. Descriptions according to other embodiments can be referenced for corresponding sections and/or associated sections.

### <First embodiment>

A first embodiment actualizing a power conversion apparatus of the present disclosure will hereinafter be described with reference to the drawings. The power conversion apparatus according to the present embodiment is mounted in an electric vehicle such as an electric car or a hybrid car, an electric aircraft, an electric ship, or the like and configures an electric moving body system.

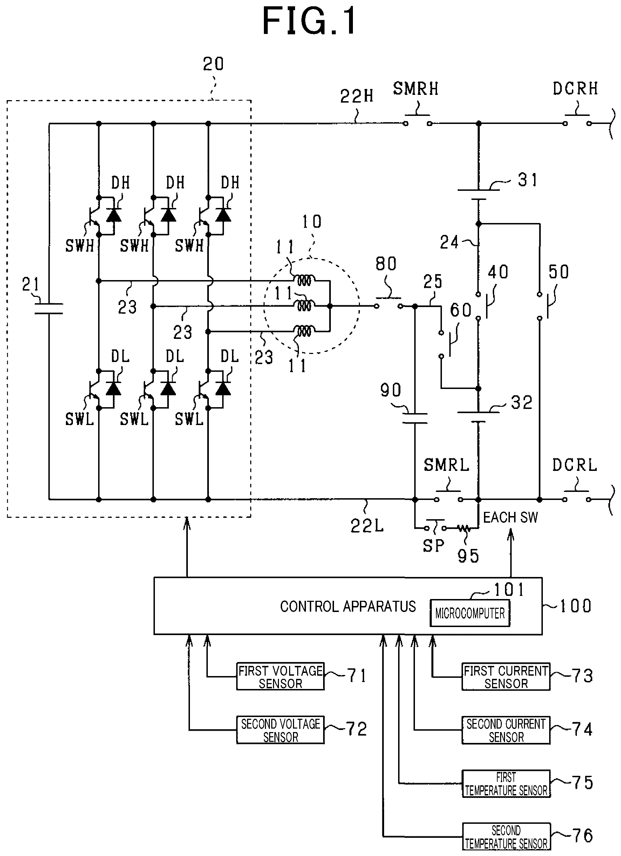

The system includes the power conversion apparatus. As shown in Fig. 1, the power conversion apparatus includes a motor 10, an inverter 20, a high-potential-side electrical path 22H, and a low-potential-side electrical path 22L. The motor 10 is a three-phase synchronous motor including U-, V-, and W-phase armature windings 11 that have a star connection, and a rotor (not shown). The armature windings 11 of the phases are arranged such as to be shifted from each other by an electrical angle of 120°. For example, the motor 10 may be a permanent-magnet synchronous motor. The rotor is capable of transmitting power to and from a driving wheel of a vehicle. Therefore, the motor 10 serves as a source of torque generation to cause the vehicle to travel.

The inverter 20 includes a series connection body composed of an upper arm switch SWH and a lower arm switch SWL for each of the three phases. An upper arm diode DH that is a freewheeling diode is connected in antiparallel to the upper arm switch SWH. A lower arm diode DL that is a freewheeling diode is connected in antiparallel to the lower arm switch SWL. According to the present embodiment, the switches SWH and SWL are insulated-gate bipolar transistors (IGBT).

The inverter 20 includes a smoothing capacitor 21. A first end side of the high-potential-side electrical path 22H having an elongated shape is connected to a high-potential-side terminal of the smoothing capacitor 21. A first end side of the low-potential-side electrical path 22L having an elongated shape is connected to a low-potential-side terminal of the smoothing capacitor 21. Here, the smoothing capacitor 21 may be provided outside the inverter 20. The smoothing capacitor 21 corresponds to a "first capacitor."

In each phase, a first end of the armature winding 11 is connected to a connection point between an emitter that is a low-potential-side terminal of the upper arm switch SWH and a collector that is a high-potential-side terminal of the lower arm switch SWL, with a conductive member 23 such as a bus bar therebetween. Second ends of the armature windings 11 of the phases are connected to one another by a neutral point. Here, according to the present embodiment, the armature windings 11 of the phases are set to have a same number of turns. As a result, for example, the armature windings 11 of the phases are set to have a same inductance.

The high-potential-side electrical path 22H is connected to the collector of the upper arm switch SWH of each phase. The low-potential-side electrical path 22L is connected to the emitter of the lower arm switch SWL of each phase.

The system includes a first storage battery 31 (corresponding to a "first power storage unit") and a second storage battery 32 (corresponding to a "second power storage unit"). The storage batteries 31 and 32 serve as a source of power supply to rotatably drive the rotor of the motor 10. Each storage battery 31 and 32 is an assembled battery configured as a series connection body of battery cells serving as unit batteries. A positive electrode terminal of the first storage battery 31 is connected to the high-potential-side electrical path 22H and a negative electrode terminal of the second storage battery 32 is connected to the low-potential-side electrical path 22L. According to the present embodiment, a terminal voltage (such as a rated voltage) of the first storage battery 31 is 400 V and a terminal voltage (such as a rated voltage) of the second storage battery 32 is 100 V. For example, the battery cell may be a secondary battery such as a lithium-ion battery.

The storage batteries 31 and 32 are capable of being charged by an external charger, described hereafter, provided outside the vehicle. For example, the external charger may be a stationary-type charger. A positive-electrode-side connecting portion to which a positive electrode terminal of the external charger can be connected is provided on the high-potential-side electrical path 22H on a second end side opposite a connection point side to the smoothing capacitor 21. A negative-electrode-side connecting portion to which a negative electrode terminal of the external charger can be connected is provided on the low-potential-side electrical path 22L on a second end side opposite a connection point side to the smoothing capacitor 21.

The power conversion apparatus includes a main switch for electrically connecting or disconnecting between the first and second storage batteries 31 and 32 and the inverter 20. Specifically, as the main switch, a high-potential-side main switch SMRH and a low-potential-side main switch SMRL are provided. In addition, the power conversion apparatus includes a charging switch for electrically connecting or disconnecting between the external charger and the first and second storage batteries 31 and 32. Specifically, as the charging switch, a high-potential-side charging switch DCRH and a low-potential-side charging switch DCRL are provided. According to the present embodiment, the switches SMRH, SMRL, DCRH, and DCRL are described as mechanical relays. However, the switches SMRH, SMRL, DCRH, and DCRL are not limited thereto and may be semiconductor switching elements. The switches SMRH, SMRL, DCRH, and DCRL inhibit bidirectional current flow when turned off and allow bidirectional current flow when turned on. The high-potential-side main switch SMRH and the high-potential-side charging switch DCRH are provided on the high-potential-side electrical path 22H in this order from the inverter 20 side. The low-potential-side main switch SMRL and the low-potential-side charging switch DCRL are provided on the low-potential-side electrical path 22L in this order from the inverter 20 side.

The power conversion apparatus includes an inter-battery switch 40, an inter-negative electrode bypass switch 50, a motor-side switch 60, and a connection switch 80 as switches for switching a connection state of the first storage battery 31 and the second storage battery 32 between a state of being connected in series or a state of being connected in parallel to the external charger. According to the present embodiment, the inter-battery switch 40, the inter-negative electrode bypass switch 50, the motor-side switch 60, and the connection switch 80 are described as mechanical relays. However, the inter-battery switch 40, the inter-negative electrode bypass switch 50, the motor-side switch 60, and the connection switch 80 are not limited thereto and may be semiconductor switching elements. The inter-battery switch 40, the inter-negative electrode bypass switch 50, the motor-side switch 60, and the connection switch 80 inhibit bidirectional current flow when turned off and allow bidirectional current flow when turned on. The inter-battery switch 40 corresponds to an "inter-power storage unit switch." The motor-side switch 60 corresponds to a "coil-side switch."

The inter-battery switch 40 is provided on an inter-battery electrical path 24 (corresponding to an "inter-power storage unit electrical path") connecting the negative electrode terminal of the first storage battery 31 and the positive electrode terminal of the second storage battery 32. As a result of the inter-battery switch 40 being turned on, the negative electrode terminal of the first storage battery 31 and the positive electrode terminal of the second storage battery 32 are electrically connected. Meanwhile, as a result of the inter-battery switch 40 being turned off, the negative electrode terminal of the first storage battery 31 and the positive electrode terminal of the second storage battery 32 are electrically disconnected.

The inter-negative electrode bypass switch 50 connects the negative electrode terminal of the first storage battery 31 and the low-potential-side electrical path 22L. As a result of the inter-negative electrode bypass switch 50 being turned on, the negative electrode terminal of the first storage battery 31 and the negative electrode terminal of the second storage battery 32 are electrically connected. Meanwhile, as a result of the inter-negative electrode bypass switch 50 being turned off, the negative electrode terminal of the first storage battery 31 and the negative electrode terminal of the second storage battery 32 are electrically disconnected.

The motor-side switch 60 and the connection switch 80 are provided on a motor-side electrical path 25 connecting the inter-battery electrical path 24 further towards the second storage battery 32 side than the inter-battery switch 40 and the neutral point of the armature windings 11. More specifically, the connection switch 80 is provided on the motor-side electrical path 25 further towards the neutral point side than the motor-side switch 60. As a result of the motor-side switch 60 and the connection switch 80 being turned on, the neutral point of the armature windings 11 and the positive electrode terminal of the second storage battery 32 are electrically connected. Meanwhile, as a result of the motor-side switch 60 and the connection switch 80 being turned off, the neutral point of the armature windings 11 and the positive electrode terminal of the second storage battery 32 are electrically disconnected. The motor-side electrical path 25 is a path electrically connecting the neutral point of the armature windings 11 and a portion of the inter-battery electrical path 24 further towards the second storage battery 32 side than the inter-battery switch 40. The motor-side electrical path 25 corresponds to a "coil-side electrical path."

The power conversion apparatus includes a first voltage sensor 71 that detects an inter-terminal voltage of the first storage battery 31 and a second voltage sensor 72 that detects an inter-terminal voltage of the second storage battery 32. The power conversion apparatus includes a first current sensor 73 that detects a current flowing to the first storage battery 31 and a second current sensor 74 that detects a current flowing to the second storage battery 32. The first current sensor 73 is provided on an electrical path connecting the positive electrode terminal of the first storage battery 31 and the high-potential-side electrical path 22H. The second current sensor 74 is provided on an electrical path connecting the negative electrode terminal of the second storage battery 32 and the low-potential-side electrical path 22L. The power conversion apparatus includes a first temperature sensor 75 that detects a temperature of the first storage battery 31 and a second temperature sensor 76 that detects a temperature of the second storage battery 32. Here, the power conversion apparatus includes, as other sensors, a rotation angle sensor that detects a rotation angle (electrical angle) of the rotor and a phase current sensor that detects a phase current flowing to the armature winding 11 of each phase.

Detection values of the sensors are inputted to a control apparatus 100 (corresponding to a "control unit") included in the power conversion apparatus. The control apparatus 100 is mainly configured by a microcomputer 101. The microcomputer 101 includes a central processing unit (CPU). Functions provided by the microcomputer 101 can be provided by software recorded in a tangible memory device and a computer that runs the software, only software, only hardware, or a combination thereof. For example, when the microcomputer 101 is provided by an electronic circuit that is hardware, the microcomputer 101 can be provided by a digital circuit including numerous logic circuits or an analog circuit. For example, the microcomputer 101 may run a program stored in a non-transitory, tangible storage medium that serves as a storage unit provided in the microcomputer 101 itself. As a result of the program being run, a method corresponding to the program is performed. For example, the storage unit may be a non-volatile memory. Here, the program stored in the storage unit can be updated over a communication network such as the Internet, through Over-The-Air (OTA), for example.

The control apparatus 100 performs switching of the switches SWH and SWL configuring the inverter 20 to perform feedback control of a controlled variable of the motor 10 to a command value, based on the detection values of the sensors. The controlled variable may be, for example, torque. In each phase, the upper arm switch SWH and the lower arm switch SWL are alternately turned on. As a result of the feedback control, rotational power of the rotor is transmitted to the driving wheel and the vehicle travels.

The positive-electrode-side connecting portion of the high-potential-side electrical path 22H and the negative-electrode-side connecting portion of the low-potential-side electrical path 22L are interfaces for connecting to the external charger. According to the present embodiment, the external charger is a low-voltage charger or a high-voltage charger. A charging voltage of the low-voltage charger is a voltage lower than the inter-terminal voltage (specifically, the rated voltage) of the series connection bodies of the first and second storage batteries 31 and 32. For example, the charging voltage may be 400 V.

The charging voltage of the high-voltage charger is a voltage higher than the rated voltage of the series connection bodies of the first and second storage batteries 31 and 32. For example, the charging voltage may be 800 V. For example, when a user or a worker connects the external charger to each connecting portion and the first and second storage batteries 31 and 32 are charged by the external charger, the control apparatus 100 switches the high-potential-side charging switch DCRH and the low-potential-side charging switch DCRL to an on-state.

Meanwhile, when charging by the external charger is not performed or the external charger is not connected, the control apparatus 100 switches the high-potential-side charging switch DCRH and the low-potential-side charging switch DCRL to an off-state. In cases in which the positive-electrode-side connecting portion and the negative-electrode-side connecting portion are exposed outside a housing of the power conversion apparatus, the user or the worker may come into contact with the positive-electrode-side connecting portion and the negative-electrode-side connecting portion. Electrocution is prevented from occurring by the high-potential-side charging switch DCRH and the low-potential-side charging switch DCRL being turned off.

The low-potential-side electrical path 22L is connected to a portion of the motor-side electrical path 25 between the motor-side switch 60 and the connection switch 80, with a neutral point capacitor 90 therebetween. The neutral point capacitor 90 is provided between the motor-side electrical path 25 and the low-potential-side electrical path 22L for the following reason. In a charging process when the external charger is connected, a high-frequency current accompanying switching is generated. The neutral point capacitor 90 is provided to suppress the high-frequency current generated in accompaniment with switching from flowing into the first and second storage batteries 31 and 32 and the external charger from the inverter 20 side. The neutral point capacitor 90 corresponds to a "second capacitor."

A series connection body composed of a pre-charging switch SP and a resistor 95 is connected in parallel to the low-potential-side main switch SMRL. For example, the pre-charging switch SP is used in a pre-charging process in which the smoothing capacitor 21 and the neutral point capacitor 90 are charged at startup of the power conversion apparatus. Here, the series connection body of the pre-charging switch SP and the resistor 95 may be omitted.

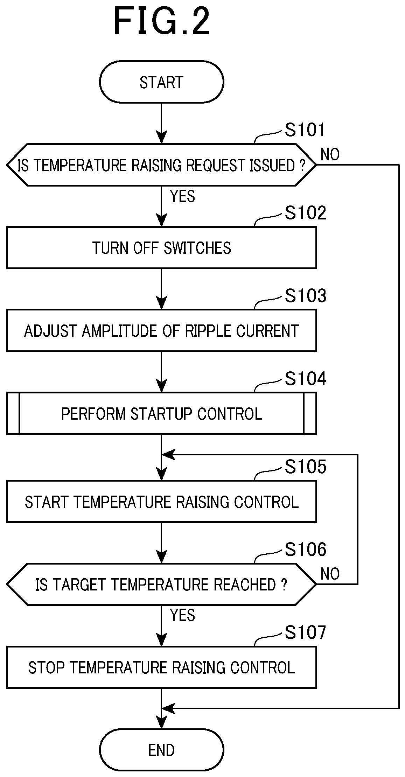

Next, an example of a method for raising the temperatures of the first storage battery 31 and the second storage battery 32 in a circuit configuration described in Fig. 1 will be described with reference to a flowchart in Fig. 2. Temperature raising control is performed by the control apparatus 100. This process is repeatedly performed at a predetermined time interval.

At step S101, the control apparatus 100 determines whether a temperature raising request for the first storage battery 31 and the second storage battery 32 is issued. For example, the control apparatus 100 can determine that the temperature raising request is issued when a temperature TB1 of the first storage battery 31 detected by the first temperature sensor 75 and a temperature TB2 of the second storage battery 32 detected by the second temperature sensor 75 are less than a target temperature. The control apparatus 100 may determine that the temperature raising request is issued when either of the temperature TB1 and the temperature TB2 is less than the target temperature. In addition, the control apparatus 100 may determine that the temperature raising request is issued when an average temperature of the temperature TB1 and the temperature TB2 is less than the target temperature. A function of the control apparatus 100 at step S101 corresponds to a "determining unit." When the decision at step S101 is YES, that is, when the control apparatus 100 determines that the temperature raising request is issued, the process proceeds to step S102. Meanwhile, when the decision at step S101 is NO, that is, when the control apparatus 100 determines that the temperature raising request is not issued, the control apparatus 100 ends the process.

At step S102, the control apparatus 100 turns off the switches. Specifically, the control apparatus 100 turns off the high-potential-side main switch SMRH, the low-potential-side main switch SMRL, the pre-charging switch SP, the high-potential-side charging switch DCRH, the low-potential-side charging switch DCRL, the inter-battery switch 40, the inter-negative electrode bypass switch 50, the motor-side switch 60, and the connection switch 80.

At step S103, the control apparatus 100 adjusts a magnitude of an amplitude of the current sent to the first storage battery 31 and the second storage battery 32. The magnitude of the amplitude may be determined, for example, based on power required to raise the temperature and the temperature. The control apparatus 100 may calculate a difference between the temperature TB1 of the first storage battery 31 and the temperature TB2 of the second storage battery 32 and the target temperature, and increase the amplitude as the difference increases. According to the present embodiment, the current sent to the first storage battery 31 and the second storage battery 32 is a ripple current including a ripple component. A waveform of the ripple current is not particularly limited but may be a sine wave shape or a rectangular wave shape.

At step S104, the control apparatus 100 performs startup control of the switches. According to the present embodiment, the control apparatus 100 performs startup control while determining whether a failure (such as on-state sticking or off-state sticking) has occurred in the switches. Details of the startup control will be described hereafter.

At step S105, the control apparatus 100 controls the upper arm switches SWH and the lower arm switches SWL of the inverter 20 and raises the temperatures of the first storage battery 31 and the second storage battery 32 by sending the ripple current thereto.

At step S106, the control apparatus 100 determines whether the temperature TB1 of the first storage battery 31 and the temperature TB2 of the second storage battery 32 have reached the target temperature. When the decision at step S106 is YES, that is, when the control apparatus 100 determines that the temperature TB1 of the first storage battery 31 and the temperature TB2 of the second storage battery 32 have reached the target temperature, the process proceeds to step S107. Meanwhile when the decision at step S106 is NO, that is, when the control apparatus 100 determines that the temperature TB1 of the first storage battery 31 and the temperature TB2 of the second storage battery 32 have not reached the target temperature, the process returns to step S105.

At step S107, the control apparatus 100 sets the switches that have been set to the on-state to the off-state and ends the temperature raising control.

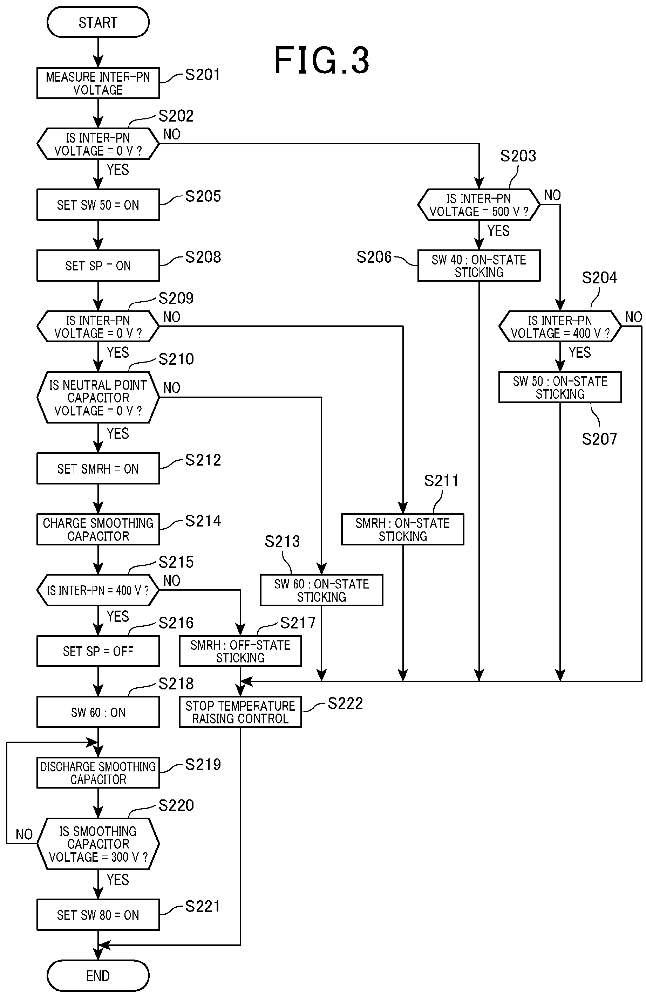

Next, details of a subroutine for the "startup control of the switches," described above, will be described with reference to a flowchart in Fig. 3.

At step S201, the control apparatus 100 acquires an inter-PN voltage detected by a sensor that detects a voltage across PN. The inter-PN voltage is a voltage across the high-potential-side electrical path 22H and the low-potential-side electrical path 22L. The process proceeds to step S202 and the control apparatus 100 determines whether the inter-PN voltage is 0 V. When the control apparatus 100 determines that the inter-PN voltage is 0 V, that is, when the decision at step S202 is YES, the process proceeds to step S205.

Meanwhile, when the control apparatus 100 determines that the inter-PN voltage is not 0 V, that is, when the decision at step S202 is NO, the process proceeds to step S203. At step S203, the control apparatus 100 determines whether the inter-PN voltage is 500 V that is a total value of the voltage of the first storage battery 31 and the voltage of the second storage battery 32. When the control apparatus 100 determines that the inter-PN voltage is 500 V, that is, when the decision at step S203 is YES, the process proceeds to step S206.

At step S206, the control apparatus 100 determines that the inter-battery switch 40 is stuck in the on-state. "On-state sticking" is a failure mode of the switch and is a failure mode in which a contact point of the switch is stuck in the connected state (on-state). For example, in a case in which the switch is a mechanical relay having a contact point, the contact point may become welded when an arc accompanying opening and closing the contact point is generated or when a current exceeding a rated value flows to the contact point. In this case, the switch is stuck in the on-state regardless of control by the control apparatus 100.

Meanwhile, when the control apparatus 100 determines that the inter-PN voltage is not 500 V, that is, when the decision at step S203 is NO, the process proceeds to step S204. At step S204, the control apparatus 100 determines whether the inter-PN voltage is the voltage (400 V) of the first storage battery 31. When the control apparatus 100 determines that the inter-PN voltage is 400 V, that is, when the decision at step S204 is YES, the process proceeds to step S207. At step S207, the control apparatus 100 determines that the inter-negative electrode bypass switch 50 is stuck in the on-state.

At step S205, the control apparatus 100 turns on the inter-negative electrode bypass switch 50. At subsequent step S208, the control apparatus 100 turns on the pre-charging switch SP. At subsequent step S209, the control apparatus 100 determines whether the inter-PN voltage is 0 V. When the control apparatus 100 determines that the inter-PN voltage is 0 V, that is, when the decision at step S209 is YES, the process proceeds to step S210.

Meanwhile, when the control apparatus 100 determines that the inter-PN voltage is not 0 V, that is, when the decision at step S209 is NO, the process proceeds to step S211. At step S211, the control apparatus 100 determines that the high-potential-side main switch SMRH is stuck in the on-state.

At step S210, the control apparatus 100 acquires a voltage Vcb of the neutral point capacitor 90 detected by an NC voltage sensor and determines whether the voltage Vcb of the neutral point capacitor 90 is 0 V. When the control apparatus 100 determines that the voltage Vcb of the neutral point capacitor 90 is 0 V, that is, when the decision at step S210 is YES, the process proceeds to step S212.

Meanwhile, when the control apparatus 100 determines that the voltage Vcb of the neutral point capacitor 90 is not 0 V, that is, when the decision at step S210 is NO, the process proceeds to step S213. At step S213, the control apparatus 100 determines that the motor-side switch 60 is stuck in the on-state.

At step S212, the control apparatus 100 turns on the high-potential-side main switch SMRH. At subsequent step S214, the smoothing capacitor 21 is charged. At subsequent step S215, the control apparatus 100 determines whether the inter-PN voltage is 400 V. When the control apparatus 100 determines that the inter-PN voltage is 400 V, that is, when the decision at step S215 is YES, the process proceeds to step S216.

Meanwhile, when the control apparatus 100 determines that the inter-PN voltage is not 400 V, that is, when the decision at step S215 is NO, the process proceeds to step S217. At step S217, the control apparatus 100 determines that the high-potential-side main switch SMRH is stuck in the off-state. "Off-state sticking" is a failure mode in which the contact point of the switch is stuck in a disconnected state.

At step S216, the control apparatus 100 turns off the pre-charging switch SP. At subsequent step S218, the control apparatus 100 turns on the motor-side switch 60. At subsequent step S219, the smoothing capacitor 21 is discharged. At subsequent step S220, the control apparatus 100 acquires a voltage Vinv of the smoothing capacitor 21 detected by an SC voltage sensor, and determines whether the voltage Vinv of the smoothing capacitor 21 is 300 V that is a voltage difference between the voltage of the first storage battery 31 and the voltage of the second storage battery 32. When the control apparatus 100 determines that the voltage Vinv of the smoothing capacitor 21 is 300 V, that is, when the decision at step S220 is YES, the process proceeds to step S221.

At step S221, the control apparatus 100 turns on the connection switch 80. After steps S206, S207, S211, S213, and S217, the process proceeds to step S222 and the control apparatus 100 stops the temperature raising control. Here, the process proceeds to step S222 when the decision at step S204 is NO, as well. This is because, when the decision at step S204 is NO, an unexpected phenomenon is likely to have occurred.

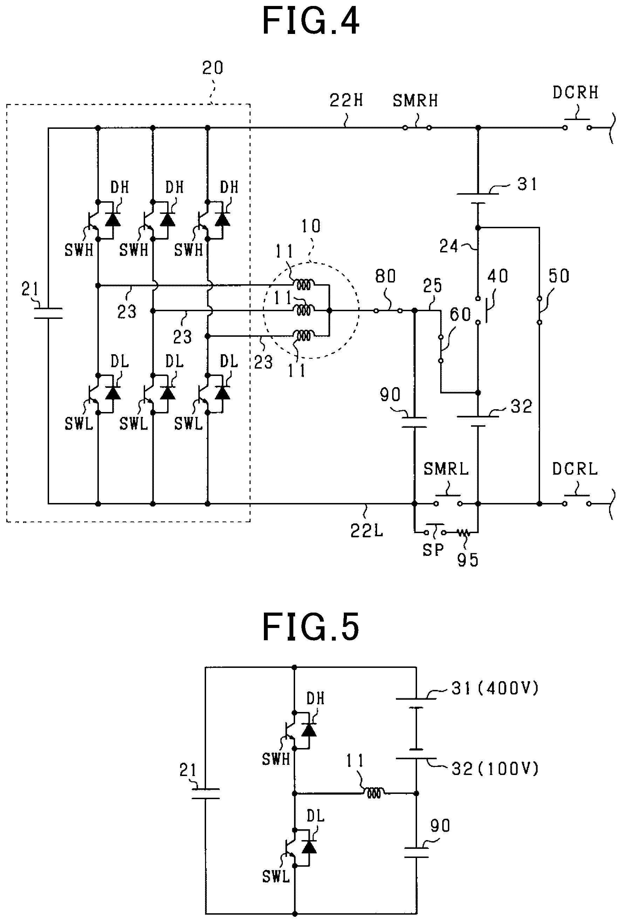

Fig. 4 shows the on- and off- states of the switches when the decision at step S221 in Fig. 3 is ended. Specifically, in Fig. 4, the high-potential-side main switch SMRH, the inter-negative electrode bypass switch 50, the motor-side switch 60, and the connection switch 80 are in the on-state, and the low-potential-side main switch SMRL, the pre-charging switch SP, the inter-battery switch 40, the high-potential-side charging switch DCRH, and the low-potential-side charging switch DCRL are in the off-state. According to the present embodiment, the temperature raising control is performed with the on- and off-states of the switches shown in Fig. 4.

Fig. 5 is an equivalent circuit of the circuit shown in Fig. 4. In the equivalent circuit, a single half-bridge circuit is formed by the upper arm switch SWH, the lower arm switch SWL, and the smoothing capacitor 21. The first end side of the armature winding 11 is electrically connected to the connection point between the upper arm switch SWH and the lower arm switch SWL. The high-potential-side electrical path and the second end side of the armature winding 11 are electrically connected via the first storage battery 31 and the second storage battery 32. The low-potential-side electrical path and the second end side of the armature winding 31 are electrically connected via the neutral point capacitor 90. The positive electrode terminal side of the first storage battery 31 is connected to the high-potential-side electrical path, and the negative electrode terminal side of the first storage battery 31 is connected to the negative electrode terminal side of the second storage battery 32.

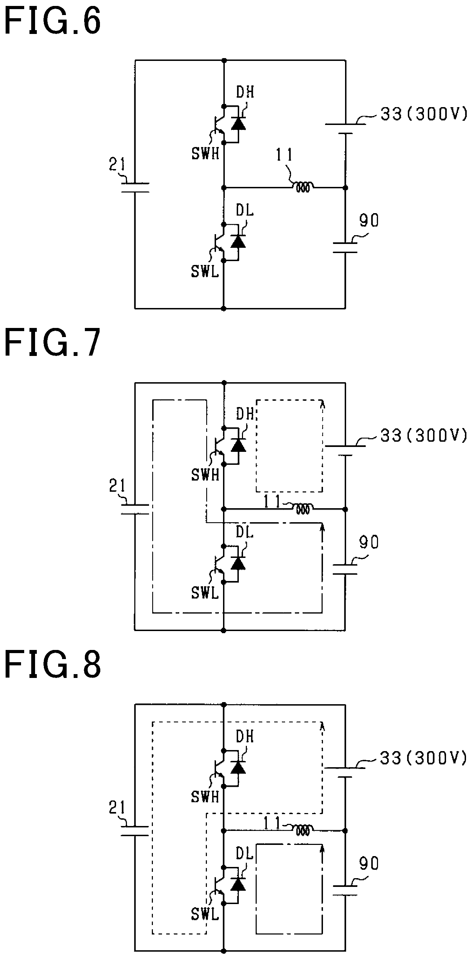

Fig. 6 is a simplified version of the equivalent circuit shown in Fig. 5. Specifically, in Fig. 6, the first storage battery 31 and the second storage battery 32 are expressed as a third storage battery 33 that is a single storage battery. The voltage of the third storage battery 33 is 300 V that is the voltage difference between the voltage of the first storage battery 31 and the voltage of the second storage battery 32.

A specific temperature raising control method according to the present embodiment will be described with reference to the equivalent circuit in Fig. 6. The control apparatus 100 alternately turns on the upper arm switch SWH and the lower arm switch SWL shown in Fig. 6 and changes an amount of time of the on-state.

First, a flow of current in a case in which the upper arm switch SWH is turned on and the lower arm switch SWL is turned off will be described. In this case, as indicated by a broken-line arrow in Fig. 7, a current flows through a closed circuit including the third storage battery 33, the upper arm switch SWH, and the armature winding 11. In addition, as indicated by a single-dot chain line arrow in Fig. 7, a current flows through a closed circuit including the neutral point capacitor 90, the armature winding 11, and the smoothing capacitor 21.

Next, a flow of current in a case in which the upper arm switch SWH is turned off and the lower arm switch SWL is turned on will be described. As indicated by a broken-line arrow in Fig. 8, a current flows through a closed circuit including the third storage battery 33 and the smoothing capacitor 21. In addition, as indicated by a single-dot chain line arrow in Fig. 8, a current flows through a closed circuit including the neutral point capacitor 90, the armature winding 11, and the lower arm switch SWL.

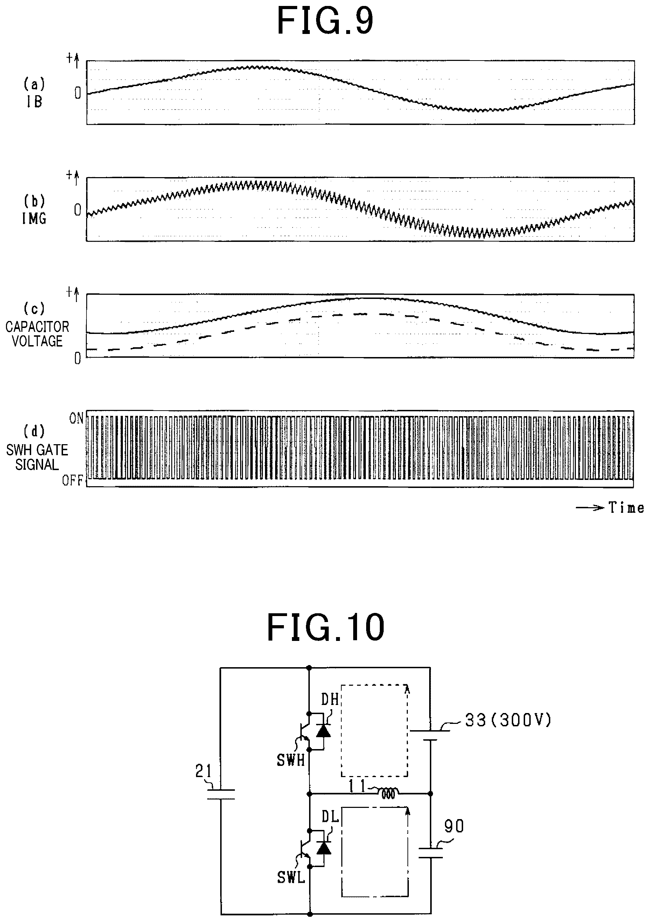

Fig. 9 shows simulation results of a case in which the upper arm switch SWH and the lower arm switch SWL are alternately turned on. Fig. 9(a) shows transitions in a current IB flowing to the third storage battery 33. Fig. 9(b) shows transitions in a current IMG flowing to the armature winding 11. A solid line in Fig. 9(c) shows transitions in the voltage Vinv of the smoothing capacitor 21. A broken line in Fig. 9(c) shows transitions in the voltage Vcb of the neutral point capacitor 90. Fig. 9(d) shows transitions in a gate signal of the upper arm switch SWH. Regarding changes in the amount of time of the on- and off-states of the upper arm switch SWH and the lower arm switch SWL, as shown in Fig. 9(d), the on-state of the upper arm switch SWH becomes shorter as the voltage Vinv of the smoothing capacitor 21 and the voltage Vcb of the neutral point capacitor 90 decrease.

As shown in Figs. 9(a), (b), and (c), the current IB and the current IMG flow in a positive direction that is a direction in which the battery is discharged as the voltage Vinv of the smoothing capacitor 21 and the voltage Vcb of the neutral point capacitor 90 increase. The current IB and the current IMG flow in a negative direction that is a direction in which the battery is charged as the voltage Vinv of the smoothing capacitor 21 and the voltage Vcb of the neutral point capacitor 90 decrease. In this manner, as a result of the upper arm switch SWH and the lower arm switch SWL being alternately turned on and the amount of time of the on-state being changed, the neutral point capacitor 90 can be charged using energy stored in the armature winding 11 and the third storage battery 33 can be charged using electrical charge stored in the neutral point capacitor 90. That is, as shown in Fig. 10, as a result of the upper arm switch SWH and the lower arm switch SWL being alternately turned on and the amount of time of the on-state being changed, the ripple current can be sent between the third storage battery 33 and the neutral point capacitor 90 through the armature winding 11.

According to the first embodiment described in detail above, the following effects can be achieved.

The power conversion apparatus includes the half-bridge circuit composed of the upper arm switch SWH and the lower arm switch SWL that are connected in series, and the smoothing capacitor 21 that is electrically connected in parallel to the upper arm switch SWH and the lower arm switch SWL, and the armature winding 11 of which the first end side is electrically connected to the connection point between the upper arm switch SWH and the lower arm switch SWL. The high-potential-side electrical path 22H and the second end side of the armature winding 11 are electrically connected via the third storage battery 33. The low-potential-side electrical path 22L and the second end side of the armature winding 11 are electrically connected via the neutral point capacitor 90.

In the above-described configuration, the control apparatus 100 can send the ripple current between the third storage battery 33 and the neutral point capacitor 90 through the armature winding 11 by alternately turning on the upper arm switch SWH and the lower arm switch SWL and changing the amount of time of the on-state. In addition, power can be consumed by internal resistance of the third storage battery 33 and the temperature of the third storage battery 33 can be raised by self-heat generation.

The third storage battery 33 is configured by the first storage battery 31 and the second storage battery 32 connected in series. As shown in Fig. 5, the negative electrode terminal side of the first storage battery 31 is connected to the negative electrode terminal side of the second storage battery 32. As a result of the negative electrodes of two storage batteries being connected to each other in series in this manner, the voltage of the overall circuit can be reduced. Consequently, while maintaining the ripple current flowing to the first storage battery 31 and the second storage battery 32, the ripple component of the current dependent on a switching cycle of the half-bridge circuit can be reduced. Here, connection is not limited to that between the negative electrode terminal side of the first storage battery 31 and the negative electrode terminal side of the second storage battery 32. All that is required is for the positive electrode terminal side of one of the first storage battery 21 and the second storage battery 32 to be electrically connected to the high-potential-side electrical path 22H and the negative electrode terminal side of the other to be electrically connected to the high-potential-side electrical path 22H.

In the equivalent circuit shown in Fig. 5, a ripple current of a same magnitude flows to the first storage battery 31 and the second storage battery 32. Therefore, an amount of heat generation in the first storage battery 31 and the second storage battery 32 is the same when an internal resistance of the first storage battery 31 and the second storage battery 32 is the same. This is useful in cases in which, as according to the present embodiment, a voltage difference is present between two storage batteries. A reason for this will be described. In cases in which a voltage difference is present between two storage batteries, sending a current to each of the two storage batteries as in the conventional technology described above can be considered. It is known that the amount of heat generation is proportional to the square of an inverse ratio of the voltage. Therefore, the amount of heat generation becomes significantly imbalanced if a voltage difference is present between the two storage batteries. In this regard, according to the present embodiment, a ripple current of the same magnitude flows to the first storage battery 31 and the second storage battery 32. Therefore, even if a voltage difference is present between the first storage battery 31 and the second storage battery 32, the amount of heat generation is the same. Occurrence of a temperature difference is suppressed.

The occurrence of a temperature difference between the two storage batteries is suppressed not only in the equivalent circuit, but also in the circuit configuration shown in Fig. 4. In the configuration shown in Fig. 4, the control apparatus 100 performs switching after turning off the inter-battery switch 40 and the low-potential-side main switch SMRL, and turning on the high-potential-side main switch SMRH, the inter-negative electrode bypass switch 50, the motor-side switch 60, and the connection switch 80, and subsequently performs switching. As a result, a ripple current of the same magnitude flows to a closed circuit including the motor-side electrical path 25, the second storage battery 32, the low-potential-side electrical path 22L, the inter-negative electrode bypass switch 50, the first storage battery 31, the high-potential-side electrical path 22H, the upper arm switch SWH, and the motor 10. Consequently, the amount of heat generation is the same even if a voltage difference is present between the first storage battery 31 and the second storage battery 32, and the occurrence of a temperature difference is suppressed.

According to the present embodiment, the armature windings 11 of the motor 10 mounted in a vehicle are used as the coil in the equivalent circuit. Through use of a pre-existing component such as this, addition of a new component is no longer necessary, thereby contributing to suppression of vehicle weight and cost reduction.

As described at step S220 in Fig. 3, the control apparatus 100 turns on the connection switch 80 when the voltage Vinv of the smoothing capacitor 21 is determined to be equal to the voltage difference between the voltage of the first storage battery 31 and the voltage of the second storage battery 32. When the connection switch 80 is turned on, an inrush current attributed to a voltage difference between the voltages of the first storage battery 31 and the second storage battery 32 and the voltage of the smoothing capacitor 21 may flow. According to the present embodiment, the connection switch 80 is turned on when the voltage Vinv of the smoothing capacitor 21 is determined to be equal to the voltage difference between the voltage of the first storage battery 31 and the voltage of the second storage battery 32. Therefore, the generation of an inrush current is suppressed.

### <Variation examples according to the first embodiment>

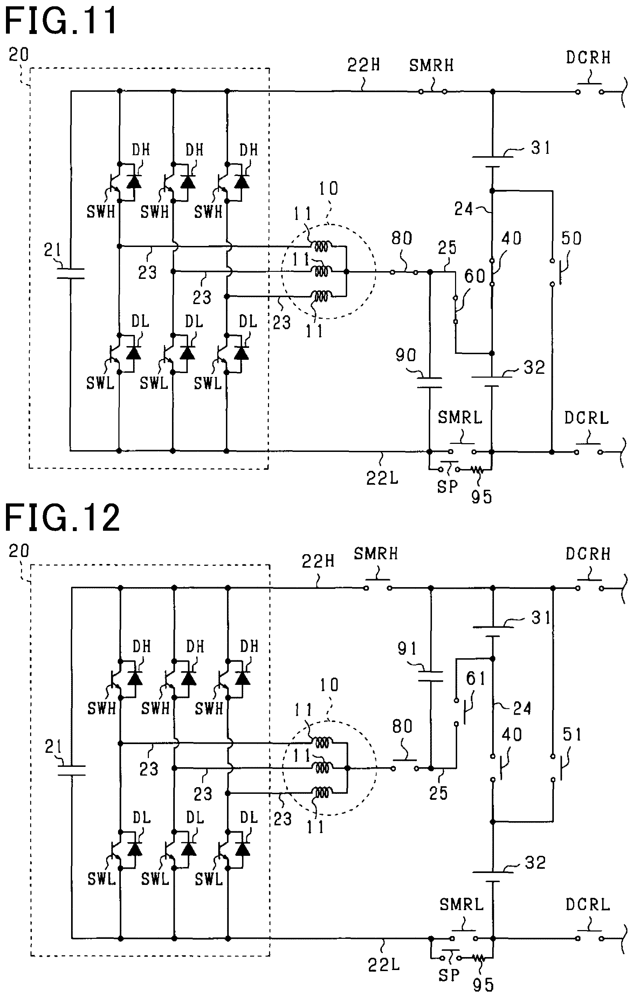

In the description above, the temperature raising control being performed when both the first storage battery 31 and the second storage battery 32 request raising of the temperature is described. However, there are also cases in which only one of the storage batteries has a low temperature and only one of the storage batteries requests raising of the temperature. For example, a case in which only the first storage battery 31 requests raising of the temperature can be considered. In this case, the control apparatus 100 may be configured to control the on-/off-states of the switches as shown in Fig. 11 and send a current to only the first storage battery 31. Specifically, in Fig. 11, the high-potential-side main switch SMRH, the inter-battery switch 40, the motor-side switch 60, and the connection switch 80 are in the on-state, and the low-potential-side main switch SMRL, the pre-charging switch SP, the inter-negative electrode bypass switch 50, the high-potential-side charging switch DCRH, and the low-potential-side charging switch DCRL are in the off-state.

If the switches are in the on-/off-states shown in Fig. 11, a current flows to a closed circuit including the first storage battery 31, the high-potential-side electrical path 22H, the upper arm switch SWH, the motor 10, the neutral point, the connection switch 80, the motor-side switch 609, and the inter-battery switch 40, and raising the temperature of only the first storage battery 31 becomes possible.

### <Second embodiment>

A second embodiment will be described below with reference to the drawings, mainly focusing on differences from the first embodiment. According to the present embodiment, as shown in Fig. 12, while the power conversion apparatus includes an inter-positive electrode bypass switch 51 that connects the positive electrode terminal of the second storage battery 32 and the high-potential-side electrical path 22H, the power conversion apparatus does not include the inter-negative electrode bypass switch 50 shown in Fig. 1, above. In addition, while the power conversion apparatus includes a neutral point capacitor 91 between the motor-side electrical path 25 and the high-potential-side electrical path 22H, the power conversion apparatus does not include the neutral point capacitor 90 shown in Fig. 1, above. Furthermore, the motor-side electrical path 25 connects the neutral point of the armature windings 11 and a portion of the inter-battery electrical path 24 further towards the first storage battery 31 side than the inter-battery switch 40 is. The motor-side electrical path 25 is provided with a motor-side switch 61.

The control apparatus 100 turns on the low-potential-side main switch SMRL, the inter-positive electrode bypass switch 51, the motor-side switch 61, and the connection switch 80, and turns off the high-potential-side main switch SMRH, the pre-charging switch SP, the inter-battery switch 40, the high-potential-side charging switch DCRH, and the low-potential-side charging switch DCRL. In these on-/off-states, the control apparatus 100 alternately turns on the upper arm switch SWH and the lower arm switch SWL, and changes the amount of time of the on-state. As a result, the ripple current flows to a closed circuit including the first storage battery 31, the high-potential-side electrical path 22H, the inter-positive electrode bypass switch 51, the second storage battery 32, the low-potential-side electrical path 22L, the lower arm switch SWL, the motor 10, the connection switch 80, and the motor-side switch 61. Because the ripple current of the same magnitude flows to the first storage battery 31 and the second storage battery 32, the amount of heat generation is the same even when a voltage difference is present between the first storage battery 31 and the second storage battery 32, and the occurrence of a temperature difference can also be suppressed, even while raising the temperatures of the first storage battery 31 and the second storage battery 32.

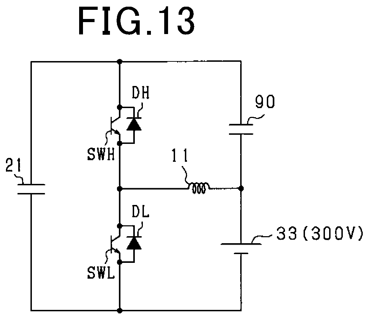

Here, Fig 13 shows an equivalent circuit when the switches are turned on and off as described above in the circuit shown in Fig. 12. In Fig. 13, compared to the equivalent circuit shown in Fig. 6, the positions of the third storage battery 33 and the neutral point capacitor 90 are interchanged. That is, in Fig. 13, the high-potential-side electrical path and the second end side of the armature winding 11 are electrically connected via the neutral point capacitor 90. The low-potential-side electrical path and the second end side of the armature winding 11 are electrically connected via the third storage battery 33. In the equivalent circuit in Fig. 13 as well, the ripple current can be sent between the third storage battery 33 and the neutral point capacitor 90 through the armature winding 11, in a manner similar to the equivalent circuit in Fig. 6.

### <Variation examples according to the second embodiment>

The control apparatus 100 may turn off the inter-positive electrode bypass switch 51, the high-potential-side electrical path 22H, the pre-charging switch SP, the high-potential-side charging switch DCRH, and the low-potential-side charging switch DCRL, and turn on the low-potential-side electrical path 22L, the inter-battery switch 40, the motor-side switch 61, and the connection switch 80. As a result, the ripple current flows to a closed circuit including the inter-battery switch 40, the second storage battery 32, the low-potential-side electrical path 22L, the lower arm switch SWL, the motor 10, the neutral point, the connection switch 80, and the motor-side switch 61. As a result, for example, in cases in which only the second storage battery 32 is requesting raising of the temperature, raising the temperature of only the second storage battery 32 is possible.

### <Third embodiment>

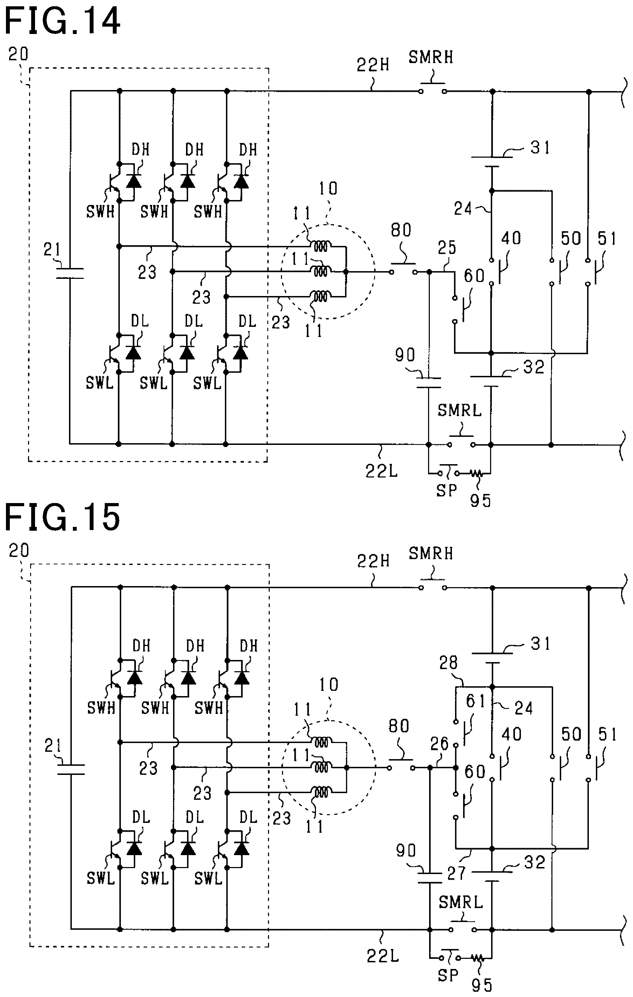

A third embodiment will be described below with reference to the drawings, mainly focusing on differences from the first embodiment. According to the present embodiment, as shown in Fig. 14, the power conversion apparatus further includes the inter-positive electrode bypass switch 51 that connects the positive electrode terminal of the second storage battery 32 and the high-potential-side electrical path 22H.

For example, the control apparatus 100 can individually charge the second storage battery 32 by a low-voltage charger in a state in which the inter-positive electrode bypass switch 51 is turned on, and the inter-negative electrode bypass switch 50, the inter-battery switch 40, the motor-side switch 60, the connection switch 80, the high-potential-side main switch SMRH, and the low-potential-side main switch SMRL are turned off.

### <Fourth embodiment>

A fourth embodiment will be described below with reference to the drawings, mainly focusing on differences from the above-described embodiments. According to the present embodiment, as shown in Fig. 15, in addition to the switch connecting the neutral point of the armature winding 11 and the negative electrode terminal of the first storage battery 31, a switch connecting the neutral point of the armature winding 11 and the positive electrode terminal of the second storage battery 32 is included as the motor-side switch.

A first end of a common path 26 is connected to the neutral point of the armature windings 11. A first end of a first electrical path 27 is connected to a second end of the common path 26, and a side of the inter-battery electrical path 24 further towards the second storage battery 32 than the inter-battery switch 40 is is connected to a second end of the first electrical path 27. In addition, a first end of a second electrical path 28 is connected to the second end of the common path 26, and a side of the inter-battery electrical path 24 further towards the first storage battery 31 than the inter-battery switch 40 is connected to a second end of the second electrical path 28. A first motor-side switch 60 is provided on the first electrical path 27. A second motor-side switch 61 is provided on the second electrical path 28. Here, the common path 26 may not be provided, and respective first ends of the first electrical path 27 and the second electrical path 28 may be connected to the neutral point of the armature windings 11.

According to the present embodiment described above, the processes in Fig. 2 and the processes in Fig. 3 of the circuit configuration shown in Fig. 1 can be performed.

### <Fifth embodiment>

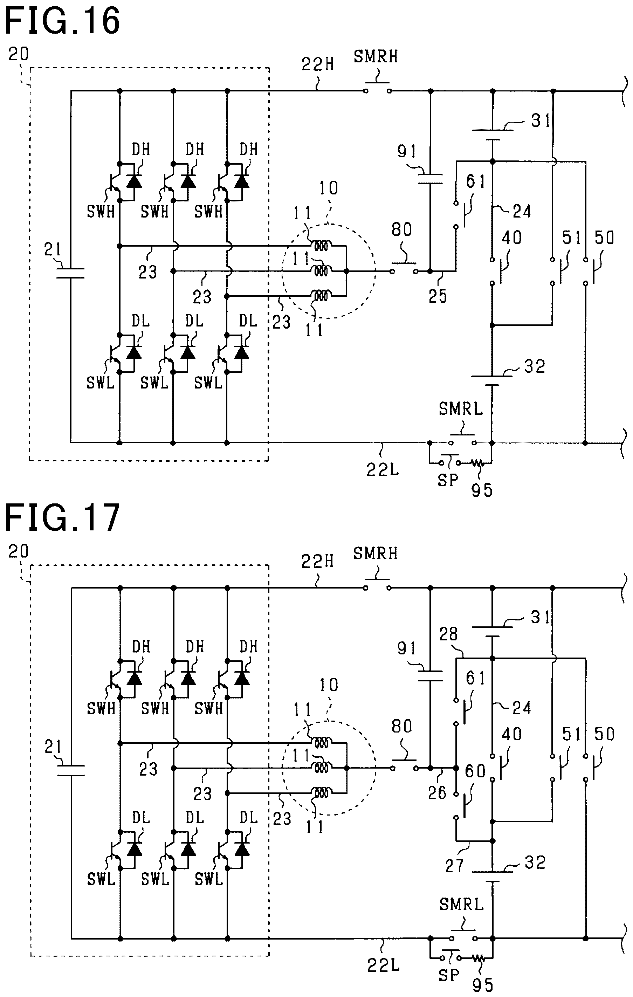

A fifth embodiment will be described below with reference to the drawings, mainly focusing on differences from the second embodiment. According to the present embodiment, as shown in Fig. 16, the power conversion apparatus further includes an inter-negative electrode bypass switch 50 that connects the negative electrode terminal of the first storage battery 31 and the low-potential-side electrical path 22L.

For example, the control apparatus 100 can individually charge the first storage battery 31 by the low-voltage charger, in a state in which the inter-negative electrode bypass switch 50 is turned on, and the inter-positive electrode bypass switch 51, the inter-battery switch 40, the motor-side switch 60, the connection switch 80, the high-potential-side main switch SMRH, and the low-potential-side main switch SMRL are turned off.

### <Sixth embodiment>

A sixth embodiment will be described below with reference to the drawings, mainly focusing on differences from the above-described embodiments. According to the present embodiment, as shown in Fig. 17, in addition to the switch that connects the neutral point of the armature windings 11 and the negative electrode terminal of the first storage battery 31, a switch that connects the neutral point of the armature windings 11 and the positive electrode terminal of the second storage battery 32 is provided as the motor-side switch.

The first end of the common path 26 is connected to the neutral point of the armature windings 11. The first end of the first electrical path 27 is connected to the second end of the common path 26, and the side of the inter-battery electrical path 24 further towards the second storage battery 32 than the inter-battery switch 40 is connected to the second end of the first electrical path 27. In addition, the first end of the second electrical path 28 is connected to the second end of the common path 26, and the side of the inter-battery electrical path 24 further towards the first storage battery 31 than the inter-battery switch 40 is connected to the second end of the second electrical path 28. The first motor-side switch 60 is provided on the first electrical path 27. The second motor-side switch 61 is provided on the second electrical path 28. Here, the common path 26 may not be provided, and respective first ends of the first electrical path 27 and the second electrical path 28 may be connected to the neutral point of the armature windings 11.

According to the present embodiment described above, the processes in Fig. 2 and the processes in Fig. 3 of the circuit configuration shown in Fig. 1 can be performed.

### <Other embodiments>

The motor is not limited to that having the star connection and may have a Δ connection. In addition, the motor and the inverter are not limited to those having three phases, and may have two phases, or four or more phases. Furthermore, the motor is not limited to the permanent-magnet-type synchronous motor having a permanent magnet in the rotor as a field pole and may be a field-winding-type synchronous motor having a field winding in the rotor as the field pole. In this case, the rotor may include both the field winding and the permanent magnet. Moreover, the motor is not limited to the synchronous motor and may be an induction motor.

The switches in the inverter 20 are not limited to the IGBT in which the freewheeling diode is connected in antiparallel and, for example, may be an N-channel metal-oxide-semiconductor field-effect transistor (MOSFET) including a body diode. In this case, a high-potential-side terminal of the N-channel MOSFET is a drain and a low-potential-side terminal is a source.

The control unit and the method thereof described in the present disclosure may be actualized by a dedicated computer that is provided such as to be configured by a processor and a memory, the processor being programmed to provide one or a plurality of functions that are realized by a computer program. Alternatively, the control unit and the method thereof described in the present disclosure may be actualized by a dedicated computer that is provided by a processor being configured by a single dedicated hardware logic circuit or more. Still alternatively, the control unit and the method thereof described in the present disclosure may be actualized by a single dedicated computer or more. The dedicated computer may be configured by a combination of a processor that is programmed to provide one or a plurality of functions, a memory, and a processor that is configured by a single hardware logic circuit or more. In addition, the computer program may be stored in a non-transitory, tangible recording medium that can be read by a computer as instructions performed by the computer.

Characteristic configurations extracted from the embodiments described above are described below.

### [Configuration 1]

A power conversion apparatus including: an upper arm switch (SWH) and a lower arm switch (SWL) that are connected in series; a first capacitor (21) that is electrically connected in parallel to the upper arm switch and the lower arm switch; a coil (11) of which a first end side is electrically connected to a connection point between the upper arm switch and the lower arm switch; a second capacitor (90); a high-potential-side electrical path (22H) that is electrically connected to the upper arm switch; a low-potential-side electrical path (22L) that is electrically connected to the lower arm switch, one of the high-potential-side electrical path and the low-potential-side electrical path and a second end side of the coil being electrically connected via the second capacitor, and the other of the high-potential-side electrical path and the low-potential-side electrical path and the second end side of the coil being electrically connected via a power storage unit (33); and a control unit (100) that performs switching of the upper arm switch and the lower arm switch.

### [Configuration 2]

The power conversion apparatus according to configuration 1, in which: the power storage unit is configured by a first power storage unit (31) and a second power storage unit (32) that are connected in series; and a positive electrode terminal side of one of the first power storage unit and the second power storage unit is electrically connected to the high-potential-side electrical path, and a negative electrode terminal side of the other is electrically connected to the high-potential-side electrical path.

### [Configuration 3]

The power conversion apparatus according to configuration 2, further including: an inter-power storage unit switch (40) that is provided on an inter-power storage unit electrical path (24) electrically connecting a negative electrode terminal of the first power storage unit and a positive electrode terminal of the second power storage unit; an inter-negative electrode bypass switch (50) that performs electrical connection between the negative electrode terminals of the first power storage unit and the second power storage unit; a coil-side switch (60) that is provided on a coil-side electrical path (25) electrically connecting the coil and the inter-power storage unit electrical path; a connection switch (80) that is provided on the coil-side electrical path further towards the connection point side than the coil side switch is; a high-potential-side switch (SMRH) that is provided on the high-potential-side electrical path between a connection point to the upper arm switch and a connection point to the positive electrode terminal of the first power storage unit; a low-potential-side switch (SMRL) that is provided on the low-potential-side electrical path between a connection point to the lower arm switch and a connection point to the negative electrode terminal of the second power storage unit, in which: the coil-side electrical path is a path electrically connecting the coil and a portion of the inter-power storage unit electrical path further towards the second power storage unit side than the inter-power storage unit switch is; and the control unit performs switching after turning off the inter-power storage unit switch and the low-potential-side switch, and turning on the high-potential-side switch, the inter-negative electrode bypass switch, the coil-side switch, and the connection switch.

### [Configuration 4]

The power conversion apparatus according to configuration 3, in which: the control unit performs switching after turning off the inter-negative electrode bypass switch and the low-potential-side switch, and turning on the high-potential-side switch, the inter-power storage unit switch, the coil-side switch, and the connection switch.

### [Configuration 5]

The power conversion apparatus according to configuration 2, further including: an inter-power storage unit switch (40) that is provided on an inter-power storage unit electrical path (24) electrically connecting a negative electrode terminal of the first power storage unit and a positive electrode terminal of the second power storage unit; an inter-positive electrode bypass switch (51) that performs electrical connection between the positive electrode terminals of the first power storage unit and the second power storage unit; a coil-side switch (61) that is provided on a coil-side electrical path (25) electrically connecting the coil and the inter-power storage unit electrical path; a connection switch (80) that is provided on the coil-side electrical path further towards the connection point side than the coil side switch is; a high-potential-side switch (SMRH) that is provided on the high-potential-side electrical path between a connection point to the upper arm switch and a connection point to the positive electrode terminal of the first power storage unit; a low-potential-side switch (SMRL) that is provided on the low-potential-side electrical path between a connection point to the lower arm switch and a connection point to the negative electrode terminal of the second power storage unit, in which: the coil-side electrical path is a path electrically connecting the coil and a portion of the inter-power storage unit electrical path further towards the first power storage unit side than the inter-power storage unit switch is; and the control unit performs switching after turning off the inter-power storage unit switch and the high-potential-side switch, and turning on the low-potential-side switch, the inter-positive electrode bypass switch, the coil-side switch, and the connection switch.

### [Configuration 6]

The power conversion apparatus according to configuration 5, in which: the control unit performs switching after turning off the inter-positive electrode bypass switch and the high-potential-side switch, and turning on the low-potential-side switch, the inter-power storage unit switch, the coil-side switch, and the connection switch.

### [Configuration 7]

The power conversion apparatus according to any one of claims 3 to 6, further including: a determining unit that determines whether a temperature raising request is issued for at least either of the first power storage unit and the second power storage unit, in which: the control unit performs switching when the determining unit determines that the temperature raising request is issued.

### [Configuration 8]

The power conversion apparatus according to any one of configurations 1 to 7, in which: a motor (10) electrically connected to the connection point is used as the coil.

### [Configuration 9]

The power conversion apparatus according to any one of configurations 3 to 8, in which: the control unit changes an amplitude of a current flowing to at least either of the first power storage unit and the second power storage unit based on a temperature of at least either of the first power storage unit and the second power storage unit.

### [Configuration 10]

The power conversion apparatus according to any one of configurations 3 to 9, in which: the control unit turns on the connection switch when a voltage of the first capacitor is determined to be equal to a voltage difference between a voltage of the first power storage unit and a voltage of the second power storage unit.

### [Configuration 11]

A program that is applicable to a power conversion apparatus including: an upper arm switch (SWH) and a lower arm switch (SWL) that are connected in series; a first capacitor (21) that is electrically connected in parallel to the upper arm switch and the lower arm switch; a coil (11) of which a first end side is electrically connected to a connection point between the upper arm switch and the lower arm switch; a second capacitor (90); a high-potential-side electrical path (22H) that is electrically connected to the upper arm switch; and a low-potential-side electrical path (22L) that is electrically connected to the lower arm switch, one of the high-potential-side electrical path and the low-potential-side electrical path and a second end side of the coil being electrically connected via the second capacitor, and the other of the high-potential-side electrical path and the low-potential-side electrical path and the second end side of the coil being electrically connected via a power storage unit (33); and a computer (101), the program causing the computer to perform a process to perform switching of the upper arm switch and the lower arm switch.

While the present disclosure has been described with reference to embodiments thereof, it is to be understood that the disclosure is not limited to the embodiments and constructions. The present disclosure is intended to cover various modification examples and modifications within the range of equivalency. In addition, various combinations and configurations, and further, other combinations and configurations including more, less, or only a single element thereof are also within the spirit and scope of the present disclosure.

## Claims

1. A power conversion apparatus comprising:
an upper arm switch (SWH) and a lower arm switch (SWL) that are connected in series;
a first capacitor (21) that is electrically connected in parallel to the upper arm switch and the lower arm switch;
a coil (11) of which a first end side is electrically connected to a connection point between the upper arm switch and the lower arm switch;
a second capacitor (90);
a high-potential-side electrical path (22H) that is electrically connected to the upper arm switch;
a low-potential-side electrical path (22L) that is electrically connected to the lower arm switch,
one of the high-potential-side electrical path and the low-potential-side electrical path and a second end side of the coil being electrically connected via the second capacitor, and
the other of the high-potential-side electrical path and the low-potential-side electrical path and the second end side of the coil being electrically connected via a power storage unit (33); and
a control unit (100) that performs switching of the upper arm switch and the lower arm switch.

2. The power conversion apparatus according to claim 1, wherein:
the power storage unit is configured by a first power storage unit (31) and a second power storage unit (32) that are connected in series; and
a positive electrode terminal side of one of the first power storage unit and the second power storage unit is electrically connected to the high-potential-side electrical path, and a negative electrode terminal side of the other is electrically connected to the high-potential-side electrical path.

3. The power conversion apparatus according to claim 2, further comprising:
an inter-power storage unit switch (40) that is provided on an inter-power storage unit electrical path (24) electrically connecting a negative electrode terminal of the first power storage unit and a positive electrode terminal of the second power storage unit;
an inter-negative electrode bypass switch (50) that performs electrical connection between the negative electrode terminals of the first power storage unit and the second power storage unit;
a coil-side switch (60) that is provided on a coil-side electrical path (25) electrically connecting the coil and the inter-power storage unit electrical path;
a connection switch (80) that is provided on the coil-side electrical path further towards the connection point side than the coil side switch is;
a high-potential-side switch (SMRH) that is provided on the high-potential-side electrical path between a connection point to the upper arm switch and a connection point to the positive electrode terminal of the first power storage unit;
a low-potential-side switch (SMRL) that is provided on the low-potential-side electrical path between a connection point to the lower arm switch and a connection point to the negative electrode terminal of the second power storage unit, wherein:
the coil-side electrical path is a path electrically connecting the coil and a portion of the inter-power storage unit electrical path further towards the second power storage unit side than the inter-power storage unit switch is; and
the control unit performs switching after turning off the inter-power storage unit switch and the low-potential-side switch, and turning on the high-potential-side switch, the inter-negative electrode bypass switch, the coil-side switch, and the connection switch.

4. The power conversion apparatus according to claim 3, wherein:
the control unit performs switching after turning off the inter-negative electrode bypass switch and the low-potential-side switch, and turning on the high-potential-side switch, the inter-power storage unit switch, the coil-side switch, and the connection switch.

5. The power conversion apparatus according to claim 2, further comprising:
an inter-power storage unit switch (40) that is provided on an inter-power storage unit electrical path (24) electrically connecting a negative electrode terminal of the first power storage unit and a positive electrode terminal of the second power storage unit;
an inter-positive electrode bypass switch (51) that performs electrical connection between the positive electrode terminals of the first power storage unit and the second power storage unit;
a coil-side switch (61) that is provided on a coil-side electrical path (25) electrically connecting the coil and the inter-power storage unit electrical path;
a connection switch (80) that is provided on the coil-side electrical path further towards the connection point side than the coil side switch is;
a high-potential-side switch (SMRH) that is provided on the high-potential-side electrical path between a connection point to the upper arm switch and a connection point to the positive electrode terminal of the first power storage unit;
a low-potential-side switch (SMRL) that is provided on the low-potential-side electrical path between a connection point to the lower arm switch and a connection point to the negative electrode terminal of the second power storage unit, wherein:
the coil-side electrical path is a path electrically connecting the coil and a portion of the inter-power storage unit electrical path further towards the first power storage unit side than the inter-power storage unit switch is; and
the control unit performs switching after turning off the inter-power storage unit switch and the high-potential-side switch, and turning on the low-potential-side switch, the inter-positive electrode bypass switch, the coil-side switch, and the connection switch.

6. The power conversion apparatus according to claim 5, wherein:
the control unit performs switching after turning off the inter-positive electrode bypass switch and the high-potential-side switch, and turning on the low-potential-side switch, the inter-power storage unit switch, the coil-side switch, and the connection switch.

7. The power conversion apparatus according to any one of claims 3 to 6, further comprising:
a determining unit that determines whether a temperature raising request is issued for at least either of the first power storage unit and the second power storage unit, wherein:
the control unit performs switching when the determining unit determines that the temperature raising request is issued.

8. The power conversion apparatus according to claim 1, wherein:
a motor (10) electrically connected to the connection point is used as the coil.

9. The power conversion apparatus according to any one of claims 3 to 6, wherein:
the control unit changes an amplitude of a current flowing to at least either of the first power storage unit and the second power storage unit based on a temperature of at least either of the first power storage unit and the second power storage unit.

10. The power conversion apparatus according to any one of claims 3 to 6, wherein:
the control unit turns on the connection switch when a voltage of the first capacitor is determined to be equal to a voltage difference between a voltage of the first power storage unit and a voltage of the second power storage unit.

11. A program that is applicable to a power conversion apparatus including:
an upper arm switch (SWH) and a lower arm switch (SWL) that are connected in series;
a first capacitor (21) that is electrically connected in parallel to the upper arm switch and the lower arm switch;
a coil (11) of which a first end side is electrically connected to a connection point between the upper arm switch and the lower arm switch;
a second capacitor (90);
a high-potential-side electrical path (22H) that is electrically connected to the upper arm switch; and
a low-potential-side electrical path (22L) that is electrically connected to the lower arm switch,
one of the high-potential-side electrical path and the low-potential-side electrical path and a second end side of the coil being electrically connected via the second capacitor, and
the other of the high-potential-side electrical path and the low-potential-side electrical path and the second end side of the coil being electrically connected via a power storage unit (33); and
a computer (101),
the program causing the computer to perform a process to perform switching of the upper arm switch and the lower arm switch.
